Europäisches Patentamt

European Patent Office

Office européen des brevets

(19)

(11) Publication number: **0 156 343**
**A2**

(12) **EUROPEAN PATENT APPLICATION**

(21) Application number: 85103490.0

(51) Int. Cl.⁴: **G 06 K 9/80**

(22) Date of filing: 25.03.85

(30) Priority: 26.03.84 JP 56044/84

(43) Date of publication of application:
02.10.85 Bulletin 85/40

(84) Designated Contracting States:
DE FR

(71) Applicant: HITACHI, LTD.
6, Kanda Surugadai 4-chome Chiyoda-ku
Tokyo 100(JP)

(72) Inventor: Suzuki, Kenji
19-4, Hirasaku-1-chome
Yokosuka-shi(JP)

(72) Inventor: Hata, Seiji
20-10, Jonan-1-chome
Fujisawa-shi(JP)

(72) Inventor: Miyakawa, Akira
Keimeiryo, 850, Maiokacho
Totsuka-ku Yokohama(JP)

(72) Inventor: Nishida, Yoshie
Ishiiso, 223, Bukkocho
Hodogaya-ku Yokohama(JP)

(74) Representative: Patentanwälte Beetz sen. - Beetz jun.
Timpe - Siegfried - Schmitt-Fumian
Steinsdorfstrasse 10
D-8000 München 22(DE)

(54) Partial pattern matching method and apparatus.

(57) In a partial pattern matching system, a dictionary pattern, a pattern to be recognized and a binary-coding unit for giving a binary-coded image pattern by comparing each pixel with a predetermined voltage (10, 101 to 103) are provided. A polygonal approximation unit (104) gives a coordinate string of vertices of a polygon composed of a plurality of successive straight line segments approximately representing a contour of the binary-coded image pattern. A contour segmentation unit (106) judges a corner point among the vertex coordinates of the polygon based upon a criterion dependent upon the shape of the polygon. the corner point being used for dividing the polygon into a plurality of partial pattern. In a matching unit (107, 109), a correspondence pair is given by subjecting each combination of the partial patterns of the dictionary and recognition-object patterns to matching comparison, and each evaluation of matching degree is given for each of the correspondence pair.

FIG. 4a

0156343

# PARTIAL PATTERN MATCHING METHOD AND APPARATUS

BACKGROUND OF THE INVENTION

FIELD OF THE INVENTION

The present invention relates to parts recognition by image processing, and more particularly it relates to a partial pattern matching method suitable for recognizing incomplete parts patterns including therein such as superposed or broken-out portions.

In the Articles, Robert C. Bolles, "ROBUST FEATURE MATCHING THROUGH MAXIMAL CLIQUES", Proc. SPIE Technical Symposium on Imaging and Assembly, April, 1979; and Shigeyuki Sakane, "Segment Matching of Shapes Based on Clique Detection of Graphs" Electrotechnical Laboratory, PRL 82-84, February 1983, there is disclosed a pattern matching system in which a set of characteristics existing locally between a pattern to be recognized and a dictionary pattern are compared with one another.

With conventional parts recognition methods, if plural parts are superposed one upon another or if a portion of the part is broken away, an entire agreement of the recognized pattern shape with the part shape is not obtained so that characteristic values are not correctly sought. Therefore, a correct recognition could not be attained, e.g., failing in recognizing the superposed parts, or overlooking the partial difference of such parts as having a broken out portion.

## SUMMARY OF THE INVENTION

It is an object of the present invention to provide a parts recognition method capable of attaining a high recognition rate with a low cost, which method is adapted to enable to recognize an incomplete pattern caused by superposition, breakage and the like of the parts thereby reducing the environmental conditions required for the recognition.

It is another object of the present invention to divide or segment, for the purpose of pattern recognition, a contour line of a two-dimensional image into partial or local patterns and to give the most proper indexes representative of the matching state of an incomplete contour.

It is still another object of the present invention to provide a method and apparatus in which a pattern recognition rate for the non-isolated or scattered object can be improved and the recognition can be achieved quickly.

In the preferred embodiment of the present invention, since an incomplete pattern coincides in part with a dictionary pattern, in recognizing the incomplete pattern, the pattern is segmented into local patterns so as to match the local pattern shape and its position. In this case, in order to check the correspondence between the dictionary pattern and the local pattern of the pattern to be recognized, both dictionary and local patterns are divided into plural patterns in accordance with the same criterion not depending upon the position and orientation of the patterns but depending upon only the contour shapes.

BRIEF DESCRIPTION OF THE DRAWINGS

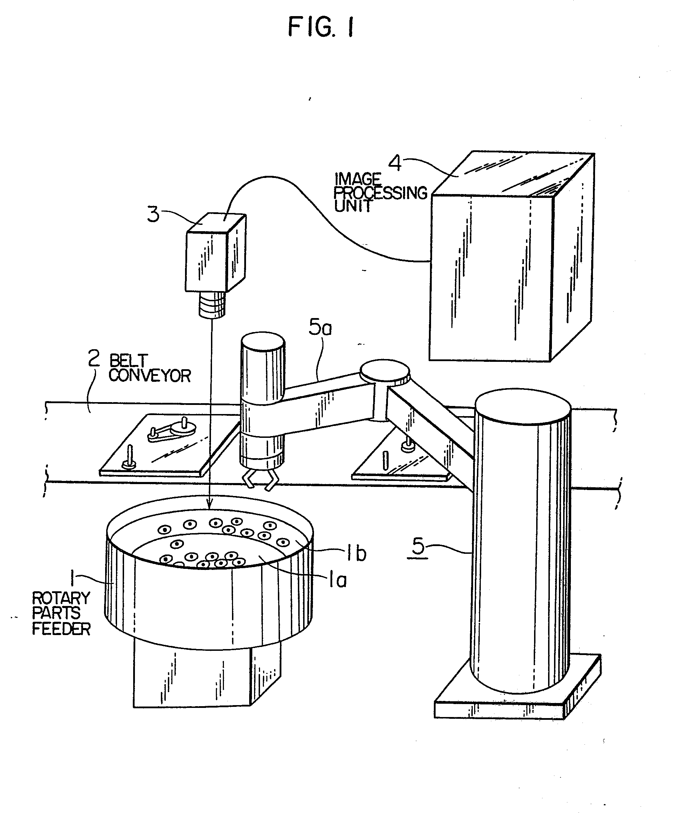

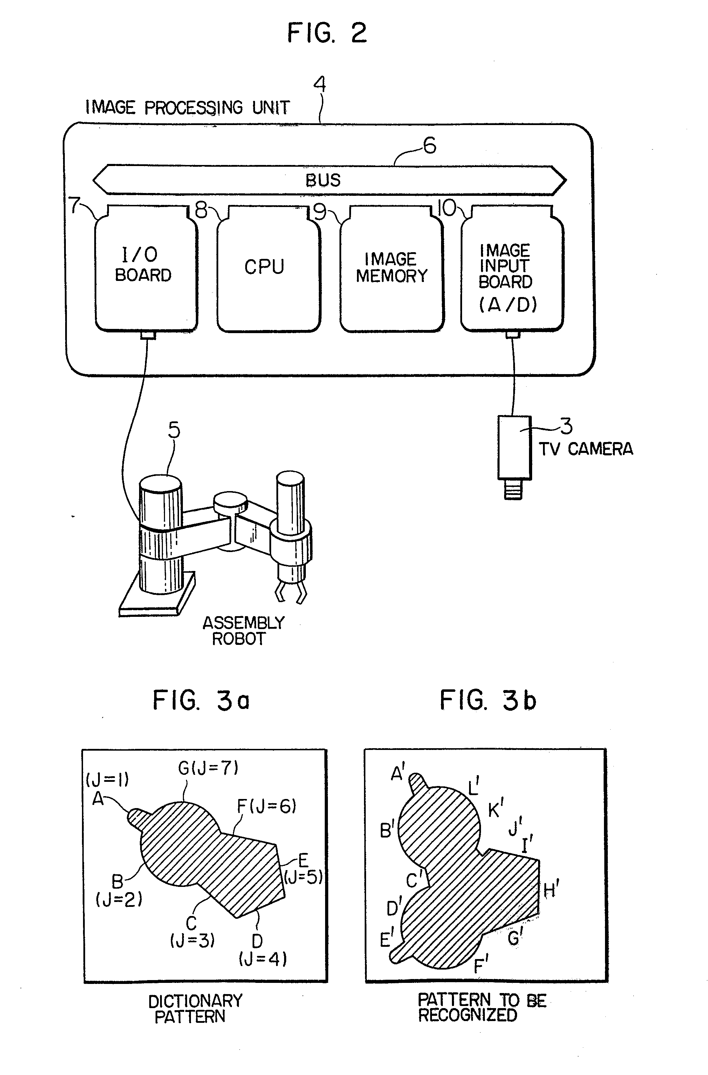

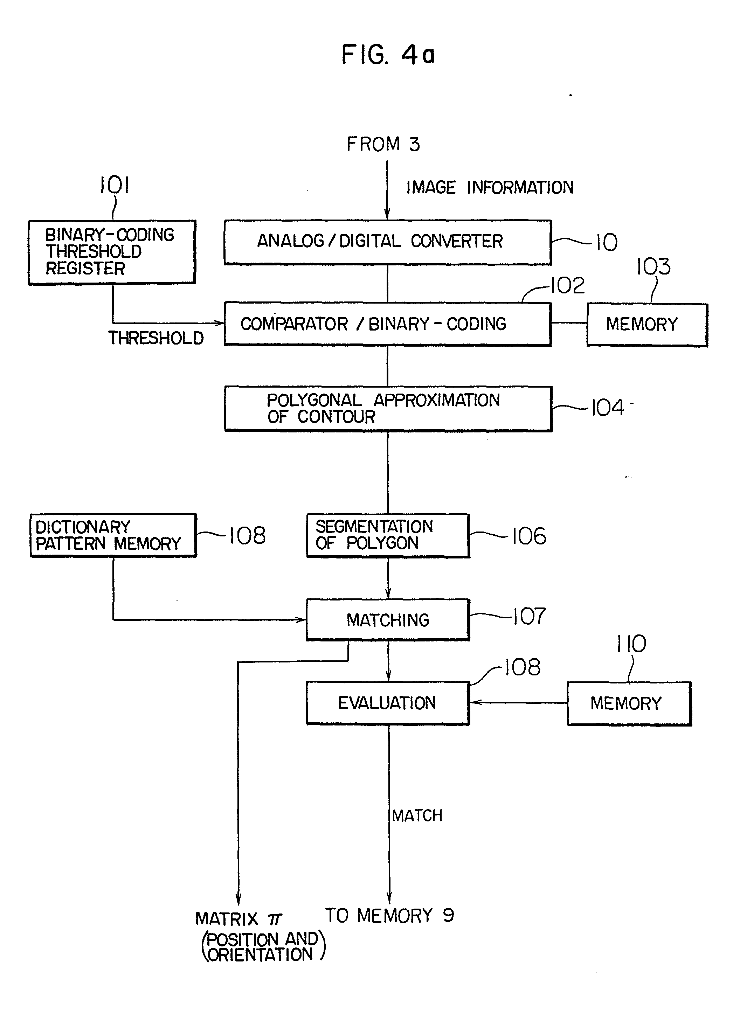

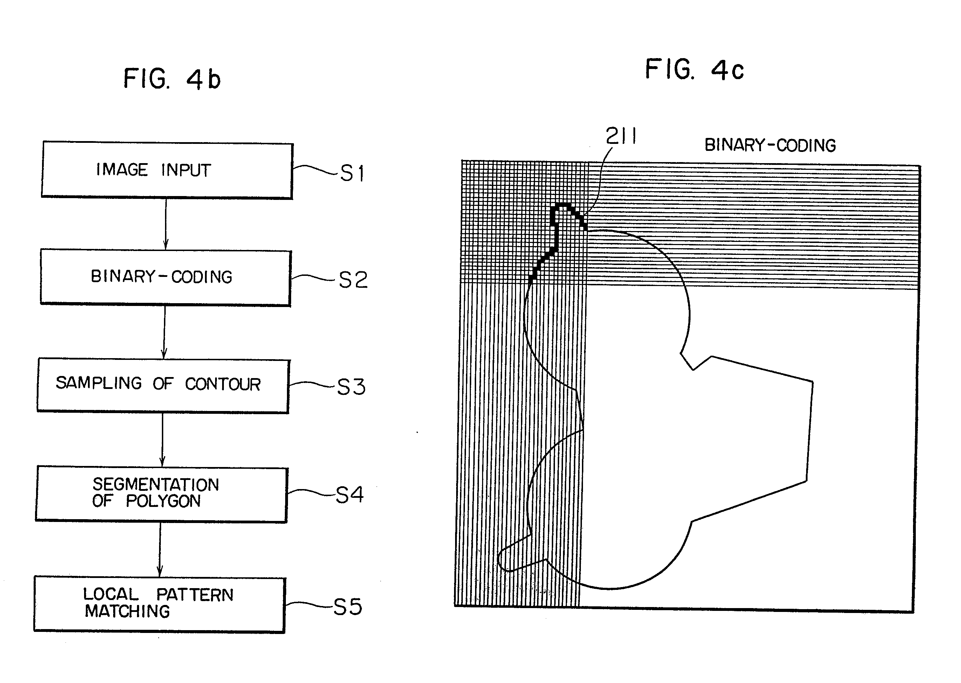

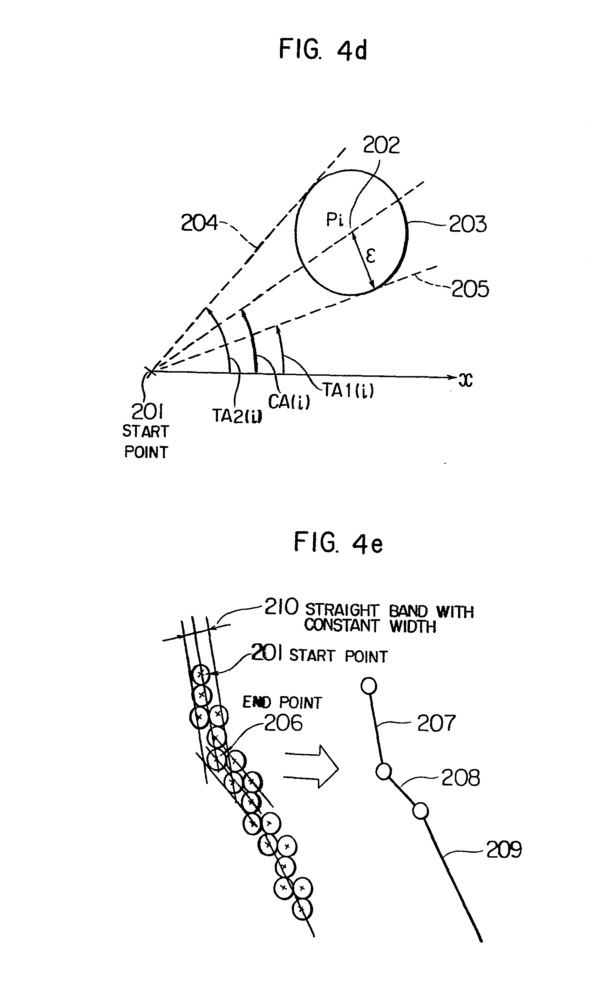

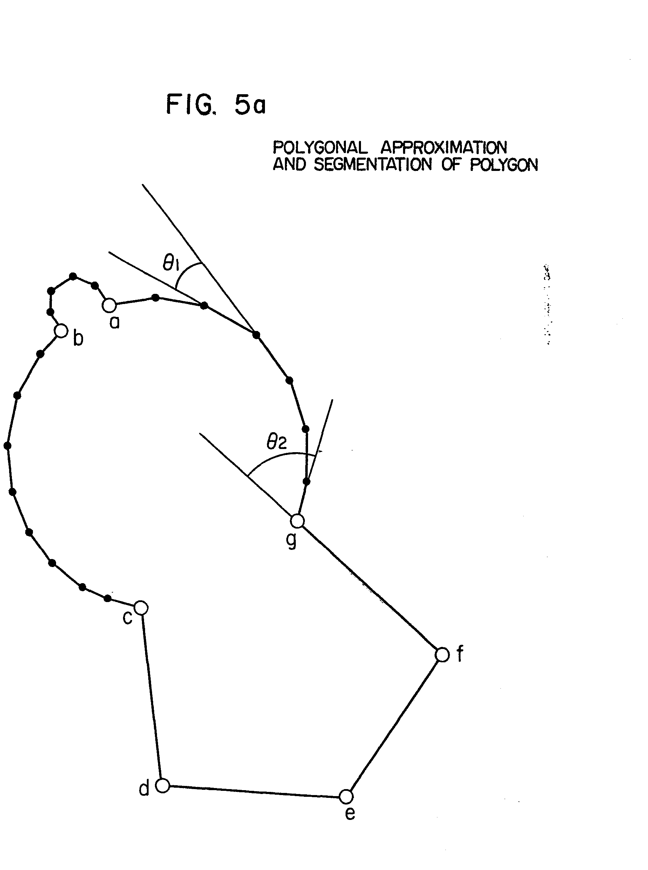

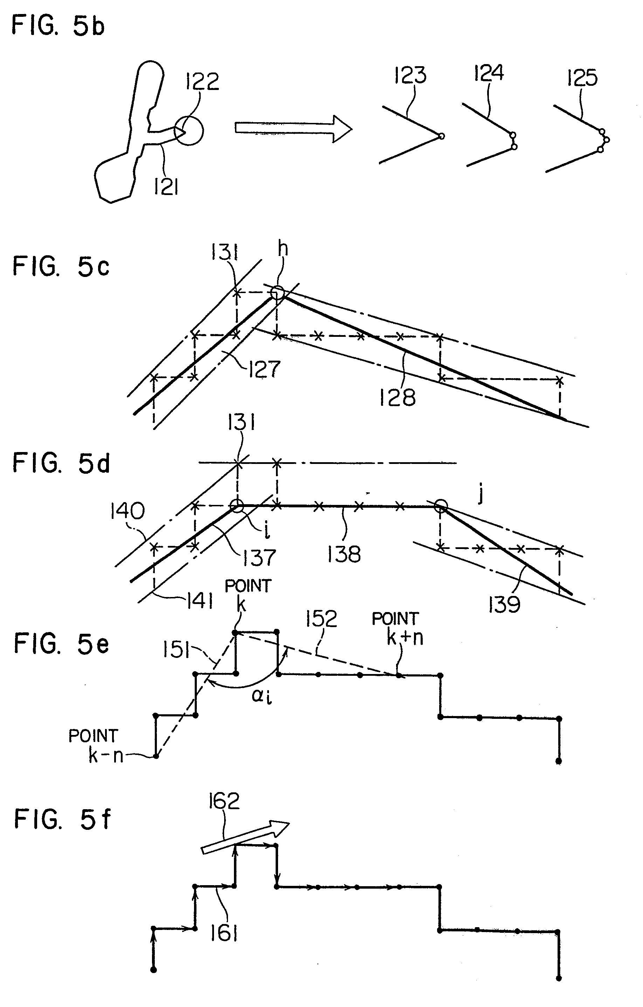

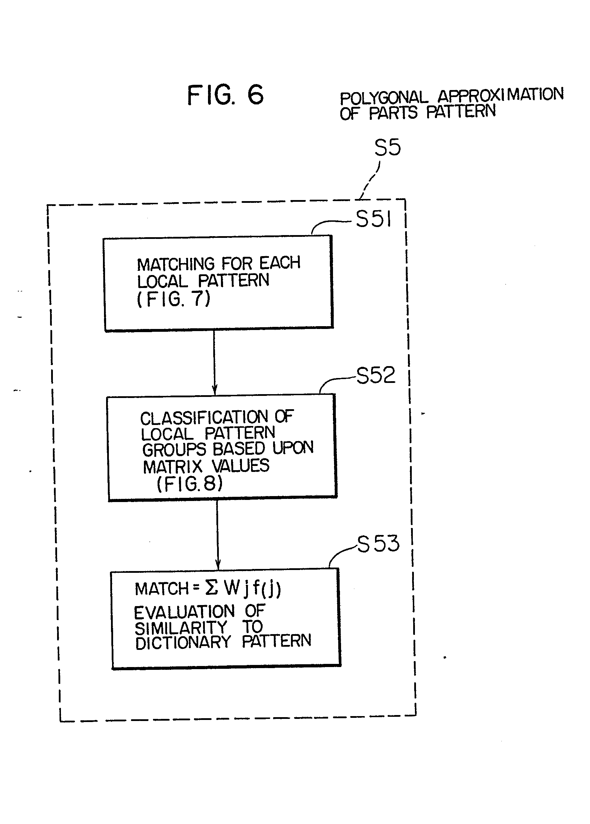

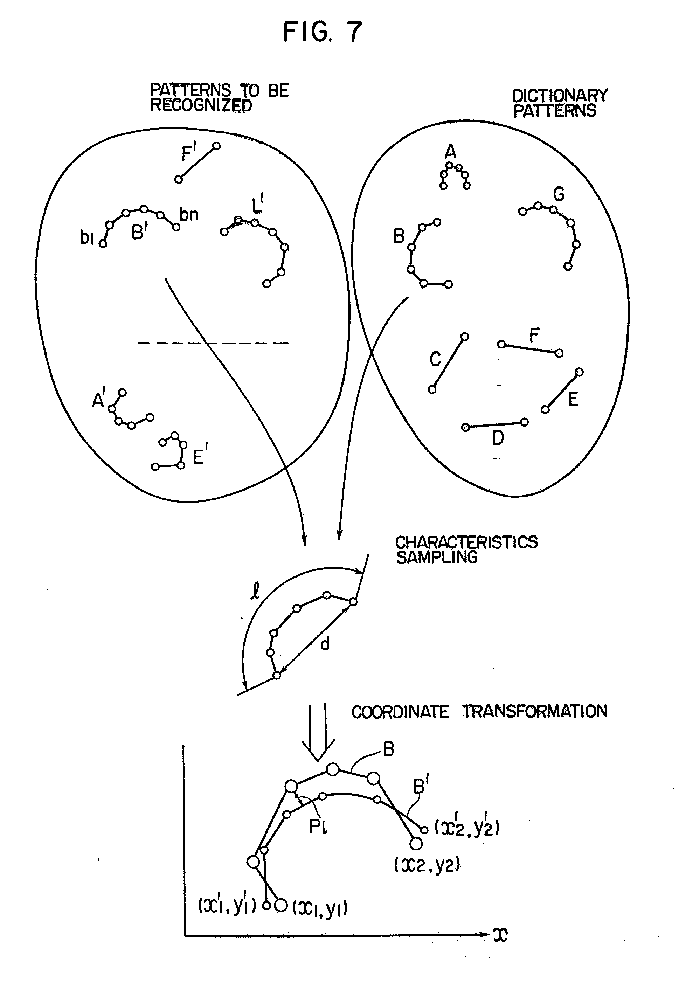

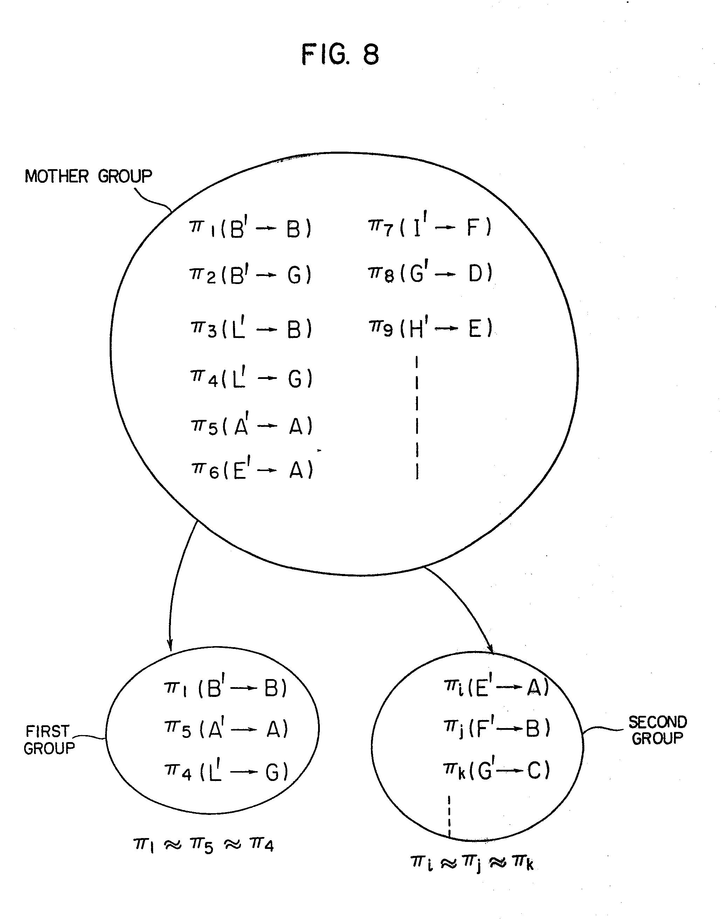

Fig. 1 shows one example of automatic assembly systems to which the method and apparatus of the present invention is applicable, Fig. 2 is a schematic view showing the construction of an image processing unit, Figs. 3a and 3b are views showing examples of a dictionary pattern and parts pattern to be recognized, respectively, Fig. 4a is a sechematic view showing the construction of a parts recognition unit, Fig. 4b is a parts recognition flow chart according to the present invention, Fig. 4c is a view showing binary-coding, Figs. 4d and 4e are views showing the processes of polygonal approximation of contour lines, Fig. 5a is a view showing the polygonal approximation and a segmentation of the polygon, Figs. 5b to 5f are views illustrating the polygonal approximation, Fig. 6 is a detailed illustration of the local pattern matching process of Fig. 4a, Fig. 7 shows schematic illustrations for explaining the local pattern matching, and Fig. 8 shows schematic illustrations of the evaluation for the matching results of each local pattern.

DESCRIPTION OF THE PREFERRED EMBODIMENTS

The embodiment of the present invention will

0156343

be described with reference to the accompanying drawings. Fig. 1 shows an automatic assembly station where a part supplied from a rotary parts feeder 1 is assembled on a chassis passing along a belt conveyor 2. The image of parts on the rotary parts feeder 1 is taken with a TV camera and input to an image processing unit 4. In the image processing unit 4, the presence or absence of a part to be assembled is recognized from the input image. If the part is present, the position and orientation of the part are calculated and the calculated results are transferred to an assembly robot 5. The assembly robot 5 moves its arm 5a in response to the information supplied from the image processing unit 4 to grasp the part and assemble it. The rotary parts feeder 1 feeds the parts piled up on a center disk 1a to a peripheral truck 1b. The parts on the truck take arbitrary and two dimensional position and orientation so that the parts may contact one another or may be superposed in part one upon another. Thus, the image of the parts occasionally presents an incomplete pattern.

The arrangement of the image processing unit 4 of Fig. 1 is shown in Fig. 2. An example of a dictionary pattern which is obtained in such a manner that a part to be used is photographed with the camera 3 and the photographed image is converted into a binary code at an A/D converter of an image input board 10a, is shown in Fig. 3a. An example of a pattern to be recognized in which two parts are superposed one upon the other is shown in Fig. 3b. The apparatus and process for the recognition are shown in Figs. 4a and 4b, respectively. First, the image is input to an analog-to-digital converter 10 and converted into digital values each representative of the brightness of each pixel in the image (step S1). Based upon the comparison results of the digital value at a comparator 102 with a binary-coding threshold from a register 101, a binary image is obtained, in which the contour line of the pattern to be recognized represents to the boundary of black region and white region (step S2). Black-colored small squares in Fig. 4c represent contour line constituting pixels obtained through binary-coding.

The contour line or curve is approximated to a polygon made of several straight lines. First, the center of one of the contour points shown in Fig. 4d is considered as a start point 201. The start point is registered as a vertex of a first approximated line segment. By introducing an imaginary circle having a radius $\varepsilon$ and a center $P_i$ for the next contour point, an upper tangent angle TA2 and lower tangent angle TA1 relative to the start point are determined. In a similar manner, by introducing circles having radii $\varepsilon$ and centers of consecutive contour points, corresponding upper and lower tangents are determined. Among the obtained tangent angles, the maximum value of TA1 is represented by MAX(TA1) while the minimum value of TA2 is represented by MIN(TA2).

0156343

In the case that MAX(TA1) > MIN(TA2) is established, it is decided that the approximation for the first line is no more possible. Then, the contour point at that time is considered as an end point of the first line and is registered.

Candidate points for the end point are judged by assuring the fact that after the renewal of MAX(TA1) and MAX(TA2) obtained from the tangent lines, a line CA drawn passing through successive points is positioned between MAX(TA1) and MAX(TA2). If the end point is not for the last data point, then using the point as a start point for approximation of another line, processings for approximating the other line are performed. For example, two parallel lines with a constant width 210 may be used to determine a line ending at the vertex of the polygon.

With such processings, a binary-coded image shown in Fig. 4c is transformed into a polygonally approximated contour made of a plurality of lines 207 to 209 connected to each other as shown at the right of Fig. 4e. In a polygonal approximation unit 104 shown in Fig. 4a, the pattern contour 211 shown in Fig. 4c is approximated to a polygon. A set of coordinates $(x_i, y_i)$ of the vertexes of the polygon are stored in a memory provided in the unit 104 (step S3). It is here noted that units 106 to 108 shown in Fig. 4a and described later include not shown memories, respectively. The vertex coordinates are given to a segmentation unit 106 wherein the polygon made of plural line segments is segmented in association with several characteristic points of the polygon (step S4). Fig. 5a shows an example of a polygonal approximation for the dictionary pattern of Fig. 3a. As seen from the figure, among angles between two adjacent sides, the angle (for example, $\theta_1$) between the two sides on a smooth curve is small, while the angle (for example, $\theta_2$) between the two sides on a corner of the pattern is large. By setting a suitable threshold in the succeeding segmentation step, it is possible to detect corners a, b, c, d, e, f, and g. The coordinates of these corner points with flags set and the remaining coordinates of the connection points between line segments can be output to a matching device 107 (step S4).

The pattern as shown in Fig. 5a can definitely be recognized. However, the recognition of an indeterminate projecting shape 122 of a pattern 121 shown in a circle of Fig. 5b is unstable due to the coarseness of pixels and displacement of the meshed pixels from those of the pattern 121: in that the polygonal approximation and segmentation may be performed to have either line segments 123 with a single corner, or line segments 124 with two corners, or line segments 125 with three corners. The more detailed description for this is given with reference to Figs. 5c and 5d. In the figures, x marks represent the centers of pixels. The two thick lines connected at a point h correspond

0156343

to two line segments 127 and 128 after subjected to the polygonal approximation. The circle about the point h indicates that the point h has been judged as a corner or vertex.

In Fig. 5d, since the meshed pixels are somewhat displaced as compared with those in Fig. 5c, the point 131 is positioned outside of two one-dot chain lines 140 and 141. In this case, another point i different from the point h in Fig. 5c is judged as a corner. Therefore, the rightmost point j on a line segment 138 will be recognized as a second corner.

In order to obviate the unstable recognition due to the mesh displacement described above, it is possible to adopt a judgement criterion as shown with Figs. 5e and 5f together with the judgement criterion using the foregoing angle threshold $\theta_0$. In particular, an angle $\alpha_i$ is calculated by drawing broken lines 151 and 152 passing through points k - n, k + n, and k, the points k - n and k + n being respectively apart from the point k by a certain number n (= 5, for example) of line segments. A similar calculation for an angle $\alpha_{i+1}$ is performed between the point (k + 1) and points (k - n + 1) and (k + n + 1). If any one of the angles is judged to have a smaller value than the preset threshold $\alpha_0$, then the corresponding point is recognized as a vertex and the other points can be excluded. Therefore, such segmentation as the lines 137 to 139 shown in Fig. 5d is not brought about, but the point k

0156343

apart from the pixel point h of Fig. 5c by a single pixel is judged as a vertex. Thus, a polygon similar in shape to that in Fig. 5c can be obtained.

Another vertex determination method will be described with reference to Fig. 5f. A certain number of contour line segments are chosen, and an arrow 162 is added. In the figure, a resultant vector 162 of 10 vectors 161 is drawn on the middle vector in the vector train. Similar resultant vectors for respective successive pixels are calculated. If the direction of the resultant vector has a large angle than a preset angle, then the corresponding pixel point is recognized as a vertex in the polygonal approximation. Thus, the unstable recognition as shown in Fig. 5d is avoided.

The processes up to step S4 for the segmentation of polygon described above with particular reference to Figs. 1 to 5f are performed first for the dictionary pattern and then for the pattern to be recognized in the practical field of pattern recognition applications.

The pattern recognition (step S5) carried out with the matching unit 107 and an evaluation unit 108 will be described in detail. Although the dictionary pattern and the pattern to be recognized respectively shown in Figs. 3a and 3b have in general different shapes, those patterns include the same portions in part. Therefore, if there exist many and the same local patterns as those in the dictionary pattern at the positions not contradictory to the positions in the

0156343

dictionary pattern, the pattern to be recognized is judged as inclusive of the dictionary pattern.

The processes for the above judgement will be described with reference to Fig. 6. First, all of the combination of local patterns in the dictionary pattern and the pattern to be recognized are checked (step S51). Next, among the local patterns judged as having the same shape, every combination not contradictory to the positions in the dictionary pattern is sought (step S52). The similarity of both patterns is judged based whether or not the sought combinations occupy a substantially large portion of the dictionary pattern (step S53).

At first, step S51 in Fig. 6 will be described in detail with reference to Fig. 7. The distance between the start and end points of a local pattern and the sum of lengths of each line of the local pattern are used as auxiliary characteristic values. For each local pattern in the pattern to be recognized, those local patterns in the dictionary pattern which have the values d and $\ell$ close to the values of the local pattern in the recognition pattern, are searched. For instance, B and G is selected for B'. Thereafter, B' is superposed upon B or G by coordinate transformation in order to check the coincidence between both local patterns. That is, in other words, the start and end points of both patterns are positioned as close as possible to each other, then all of the shortest distances $P_i$ from the

vertices of one pattern to the sides of the other pattern (for example, the length $P_i$ of a perpendicular from a vertex of B' to the adjacent side of B) is checked whether there is a longer distance than a preset threshold D1. If it is decided to be coincident, coordinate transformation factors representative of a shift and rotation at that time are stored as a coordinate transformation matrix $\pi$. The adjacent side corresponding to vertex may be plural in number, thus the coincidence judgement may be made when the sum $\sum_i P_i$ of all of the lengths $P_i$ between the vertices and sides becomes smaller than a preset threshold D2.

Step S52 in Fig. 6 will be described with reference to Fig. 8. The local pattern correspondence between the patterns decided at step S51 as having the same shape is shown in Table (a). The coordinate transformation matrixes $\pi_j$ (j = 1, 2, ...) shown as a mother group in Fig. 8 for all of the above decided patterns, are divided into group 1 and group 2 respectively having almost the same coordinate transformation matrix value, by using a criterion judging whether the matrix value is within a permissible range or not. As a result, among the dictionary and the patterns to be recognized judged as having the same shape, only those having not contradictory positional relations to each other as shown in Tables (b) and (c), i.e, groups of correspondence pairs of the local patterns can be obtained.

LOCAL PATTERN CORRESPONDENCE

| Table (a) | Table (b) | Table (c) |
|---|---|---|
| A' - A | A - A' | A - E' |
| B' - B, G | B - B' | B - F' |
| C' - None | C | C - G' |
| D' - None | D | D - H' |
| E' - A | E | E - I' |
| F' - B, G | F | F |
| G' - C, F | G - L' | G |
| H' - D | | |
| I' - E | | |
| J' - None | | |
| K' - None | | |
| L' - B, G | | |

At step S53, the groups of the local patterns thus obtained are evaluated as to the degree of similarity.

The evaluation employs the following evaluation function MATCH:

$$\text{MATCH} = \Sigma \, W_j \cdot f(j)$$

$j$: the local pattern number of the dictionary pattern

$W_j$: weight of each local pattern of the dictionary

pattern $\sum_j Wj = 1$

$$f(j) = \begin{cases} \text{"1": indicative of ·the presence of the} \\ \quad\quad \text{corresponding local pattern in the} \\ \quad\quad \text{object pattern to be recognized} \\ \text{"0": indicative of the absence of such} \\ \quad\quad \text{local pattern} \end{cases}$$

The weight $W_j$ is previously determined depending upon the importance of the characteristics of the local pattern. By setting a threshold for the value of the evaluation function, the groups of local patterns having the value of the evaluation function MATCH exceeding the threshold are judged as the same as the dictionary pattern shown in Fig. 3a for example.

Each local pattern belonging to the group which is judged having the same pattern as the dictionary pattern, is part of the dictionary pattern not contradictory to the position and orientation thereof. The calculated results of the position and orientation of the part pattern in the pattern to be recognized are sent to the robot. Although it is not necessarily the case that the position and orientation of the part pattern can be calculated from the position and orientation of some local patterns, it is possible to obtain the position and orientation of the part pattern by all means if suitable threshold values of the evaluation function and weight $W_j$ are set.

0156343

The present invention is not intended to be limited to the recognition of assembly parts for an assembly robot, but other pattern recognitions are also applicable.  For example, the present invention is applicable to a character recognition in which each stroke in a thin character is recognized as a local pattern and the above evaluation function is used. Another application is to such a case as an additional part is mounted on a movable part on a mechanical base plate wherein the contour of the movable part is indefinitely recognized because of the unstable condition of the background of the base plate.

According to the above embodiments, it is effective in that the recognition rate and speed for generally incomplete parts can be improved.

CLAIMS:

1.        A partial pattern matching method for recognizing an object pattern by comparing a dictionary pattern
with the recognition-object pattern comprising the
steps of:

(a) approximating (S1, S2, S3) a contour line
of a region in a two dimensional image for the recognition-
object pattern to a pattern having a plurality of
consecutive line segments basing upon a criterion depending only upon the shape of said contour line;

(b) contour segmenting (S4) said polygon
pattern basing upon the shape of said polygon pattern
into a partial pattern having at least one polygon
edge; and

(c) matching (S5) said partial patterns of
said dictionary pattern and recognition-object patterns.

2.        A method according to claim 1, wherein said
approximation step (a) includes a step of giving the
coordinates of each vertex of a polygon approximated
to said contour line, and said step (c) matches said
local patterns by weighting each local pattern in
accordance with the contribution to the characteristics
of the shape of said dictionary pattern.

3.        A method according to claim 1, wherein said
contour segmenting step (b) uses as a division vertex
of said partial pattern a polygonal vertex where the
angle between the directions of one of said plurality
of successive line segments and an adjacent line segment changes to a large degree.

4.      A method according to claim 1, wherein each of said partial patterns of said dictionary pattern and recognition-object pattern has a simple shape as a whole without an inflection point.

5.      A method according to claim 4, wherein said matching step (c) includes the steps of: setting as a first characteristic amount the distance between both ends of each of said partial pattern and the sum of line segments on each of said partial pattern; selecting the partial pattern having said first characteristic amount within a preset error range and setting as a second characteristic amount the position and orientation of each selected partial pattern; and setting as a matrix the amount of shift and rotation for transforming the coordinates of one of the partial pattern to the other of the partial pattern.

6.      A method according to claim 5 further comprising:

        a step of classifying said partial pattern having the value of said matrix within a preset error range into the same group;

        a step of giving an index indicative of the presence or absence, within said same group, of the partial pattern of said recognition-object pattern corresponding to the partial pattern of said dictionary pattern;

        a step of setting for each partial pattern of said dictionary pattern a weight dependent upon the characteristics of the contour of said each partial pattern; and

a step of giving an evaluation function wherein the multiplication of said index by said weight is added for all of the combinations of partial patterns within said same group.

7.    A partial pattern matching method for recognizing a recognition-object pattern by comparison with a dictionary pattern comprising the steps of:

(a) binary-coding a two dimensional image obtained by photographing an object relative to the plurality of minute digital pixels and giving an image data representative of a contour line of said image;

(b) approximating the image data representative of said contour line to a polygon having a plurality of successive line segments basing upon a criterion determining opposite ends of a line segment in accordance with a criterion that successive pixels are inside of two parallel going lines set in the direction of the successive pixels at a predetermined space therebetween, and giving a string of coordinates representative of respective vertices of said polygon;

(c) dividing said polygon, by using said line segment included in said polygon as a unit, into a plurality of partial patterns relative to each division vertex where the directions of said line segments change by a larger angle than a preset angle, and adding a flag to the coordinates representative of said division vertex (S4);

(d) storing into a memory partial pattern collections for respective said recognition-object pattern and dictionary object pattern by performing the steps (a) to (c);

(e) selecting a pair of partial patterns among the pairs derived one by one from each of said partial pattern collections, said selected pair having a smaller difference than a preset value between the values of each sum $\ell_1$ and $\ell_2$ of line segments on the paired partial pattern and the values of each distance d1 and d2 between start and end points of said paired partial pattern, and giving a coordinate transormation matrix for the alignment of the position and orientation of one of said paired partial patterns with the other of said paired partial patterns (S51);

(f) classifying said coordinate transformation matrix obtained for each partial pattern into the same group if the value of said matrix is within a preset error range, and giving an index f(j) which differs depending upon the presence.or absence of said partial pattern of said dictionary pattern (S52); and

(g) giving an evaluation function MATCH = $\sum_j W_j \cdot f(j)$ by adding for each group the multiplication results of a preset weight $W_j$ given to each of said partial pattern of said dictionary pattern.

8.　　A method according to claim 7, wherein said polygonal approximation step (b) includes the steps of: giving in succession to each pixel a resultant vector (162) of a predetermined number of vectors each indicative of the distance and direction associated with adjacent two of said pixels; and setting as a vertex of said polygon a point where said successive resultant vector changes to a large extent excessing a preset range.

9.      A method according to claim 7, wherein said polygonal approximation step (b) includes the steps of: giving an angle $\alpha_i$ between two straight lines passing through each of said pixels on said contour line and respective two pixels being oppositely positioned apart by a certain number of pixels from said each of said pixels; and setting as a vertex of said polygon a pixel where said angle $\alpha_i$ is smaller than a preset angle.

10.     A partial pattern matching system for a dictionary pattern and a recognition-object pattern comprising:

        (a) binary-coding means input with an image information for giving a binary-coded image pattern by comparing each pixel with a predetermined voltage (10, 101, 102, 103);

        (b) polygonal approximation means for giving a coordinate string of apexes of a polygon composed of a plurality of successive straight line segments approximately representing a contour of said binary-coded image pattern (104);

(c) contour segmentation means for judging a corner point among the vertex coordinates of said polygon basing upon a criterion dependent upon the shape of said polygon, said corner point being used for dividing said polygon into a plurality of partial patterns (106);

(d) means for providing a correspondence pair by subjecting each combination of said partial patterns of said dictionary and recognition-object patterns to matching comparison (107, 109); and

(e) means for evaluation of matching of each of said correspondence pair (108, 110).

FIG. I

4 IMAGE PROCESSING UNIT

3

5a

2 BELT CONVEYOR

5

1b

1a

1 ROTARY PARTS FEEDER

# FIG. 2

IMAGE PROCESSING UNIT 4

BUS 6

| 7 I/O BOARD | 8 CPU | 9 IMAGE MEMORY | 10 IMAGE INPUT BOARD (A/D) |

5 ASSEMBLY ROBOT

3 TV CAMERA

## FIG. 3a

G(J=7)
(J=1)
A
F(J=6)
B (J=2)
E (J=5)
C (J=3)
D (J=4)

DICTIONARY PATTERN

## FIG. 3b

A'
L'
K'
B'
J'
I'
C'
H'
D'
E'
G'
F'

PATTERN TO BE RECOGNIZED

## FIG. 4a

FROM 3

IMAGE INFORMATION

101 — BINARY-CODING THRESHOLD REGISTER

ANALOG / DIGITAL CONVERTER — 10

103

THRESHOLD

COMPARATOR / BINARY - CODING — 102

MEMORY — 103

POLYGONAL APPROXIMATION OF CONTOUR — 104

108 — DICTIONARY PATTERN MEMORY

SEGMENTATION OF POLYGON — 106

MATCHING — 107

110

108 — EVALUATION

MEMORY — 110

MATCH

MATRIX $\pi$ (POSITION AND ORIENTATION)

TO MEMORY 9

# FIG. 4b

```
┌─────────────────────────┐
│      IMAGE  INPUT        │───S1
└─────────────────────────┘
            │
            ▼
┌─────────────────────────┐
│     BINARY-CODING        │───S2
└─────────────────────────┘
            │
            ▼
┌─────────────────────────┐
│  SAMPLING OF CONTOUR     │───S3
└─────────────────────────┘
            │
            ▼
┌─────────────────────────┐
│     SEGMENTATION         │───S4
│     OF  POLYGON          │
└─────────────────────────┘
            │
            ▼
┌─────────────────────────┐
│   LOCAL  PATTERN         │───S5
│   MATCHING               │
└─────────────────────────┘
```

# FIG. 4c

211

BINARY-CODING

0156343

0156343

## FIG. 4d

## FIG. 4e

FIG. 5a

POLYGONAL APPROXIMATION
AND SEGMENTATION OF POLYGON

FIG. 5b

FIG. 5c

FIG. 5d

FIG. 5e

FIG. 5f

0156343

FIG. 6          POLYGONAL APPROXIMATION
                OF PARTS PATTERN

S5

┌ ─ ─ ─ ─ ─ ─ ─ ─ ─ ─ ─ ─ ─ ─ ─ ─ ─ ┐

S51

┌─────────────────────┐
│ MATCHING FOR EACH    │
│ LOCAL PATTERN        │
│ (FIG. 7)             │
└─────────────────────┘

S52

┌─────────────────────┐
│ CLASSIFICATION OF    │
│ LOCAL PATTERN        │
│ GROUPS BASED UPON    │
│ MATRIX VALUES        │
│ (FIG.8)              │
└─────────────────────┘

S53

┌─────────────────────┐
│ MATCH = $\sum W_j f(j)$ │
│ EVALUATION OF        │
│ SIMILARITY TO        │
│ DICTIONARY PATTERN   │
└─────────────────────┘

# FIG. 7

PATTERNS TO BE RECOGNIZED

DICTIONARY PATTERNS

CHARACTERISTICS SAMPLING

COORDINATE TRANSFORMATION

FIG. 8

MOTHER GROUP

$\pi_1(B' \to B)$    $\pi_7(I' \to F)$

$\pi_2(B' \to G)$    $\pi_8(G' \to D)$

$\pi_3(L' \to B)$    $\pi_9(H' \to E)$

$\pi_4(L' \to G)$

$\pi_5(A' \to A)$

$\pi_6(E' \to A)$

FIRST GROUP

$\pi_1(B' \to B)$

$\pi_5(A' \to A)$

$\pi_4(L' \to G)$

$\pi_1 \approx \pi_5 \approx \pi_4$

SECOND GROUP

$\pi_i(E' \to A)$

$\pi_j(F' \to B)$

$\pi_k(G' \to C)$

$\pi_i \approx \pi_j \approx \pi_k$